Europäisches Patentamt

European Patent Office

Office européen des brevets

(11) Veröffentlichungsnummer: **0 218 648**
**B1**

## (12) EUROPÄISCHE PATENTSCHRIFT

(45) Veröffentlichungstag der Patentschrift: **10.10.90**

(21) Anmeldenummer: **86902329.1**

(22) Anmeldetag: **12.04.86**

(86) Internationale Anmeldenummer:
**PCT/DE86/00161**

(87) Internationale Veröffentlichungsnummer:
**WO 86/06222 23.10.86 Gazette 86/23**

(51) Int. Cl.⁵: **H 02 H 3/33**, H 02 H 3/05

(54) FEHLERSTROMSCHUTZSCHALTER.

(30) Priorität: **16.04.85 AT 1137/85**

(43) Veröffentlichungstag der Anmeldung:
**22.04.87 Patentblatt 87/17**

(45) Bekanntmachung des Hinweises auf die
Patenterteilung:
**10.10.90 Patentblatt 90/41**

(84) Benannte Vertragsstaaten:
**AT BE CH DE FR LI LU NL SE**

(56) Entgegenhaltungen:
**DE-A-1 808 770
DE-A-2 555 302
FR-A-2 246 097
FR-A-2 321 208
FR-A-2 416 580
GB-A-2 082 408**

(73) Patentinhaber: **Asea Brown Boveri
Aktiengesellschaft
Kallstadter Strasse 1
D-6800 Mannheim-Käfertal (DE)**

(72) Erfinder: **BIEGELMEIER, Gottfried
Kahlenbergerstrasse 2b
A-1190 Wien (AT)**

(74) Vertreter: **Rupprecht, Klaus, Dipl.-Ing. et al
c/o Asea Brown Boveri Aktiengesellschaft
Zentralbereich Patente Postfach 100351
D-6800 Mannheim 1 (DE)**

**Beschreibung**

Die Erfindung betrifft einen Fehlerstromschutzschalter.

Den Anstoß zur Erfindung gibt die Erfahrung, die bei der Anwendung der Fehlerstromschutzschaltung gemacht worden ist und die nach neuen technischen Lösungen verlangt, um die bekannt gewordenen Lücken im Schutzumfang dieser heute in vielen Ländern angewendeten Schutzmaßnahme zu schließen.

Die für die Konstruktion von Fehlerstromschutzschaltern möglichen drei Grundschaltungen wurden schon vor zwanzig Jahren angegeben (1). Die zuerst in Österreich angewendeten FI-Schutzschalter mit Impuls- oder Energiespeicherauslösung, eine richtungsweisende Erfindung (AT—PS—197 368), wurden in großen Stückzahlen eingebaut und haben sich als zuverlässig erwiesen. Als Schaltorgan der Energiespeicherschaltung wurde zuerst eine Glimmlampe verwendet, wodurch diese Lösung kostspielig war (hohe Sekundärwindungszahl beim Summenstromwandler) und zuviel Raum in Anspruch nahm. Die Halbleitertechnik stellt aber heute geeignete Bauelemente zur Verfügung, die billig und mit kleinen Abmessungen die Glimmlampe als Schaltelement ersetzen können. Mit Schaltspannungen, die bei 10 Volt liegen, ermöglichen sie verhältnismäßig kleine Sekundärwindungszahlen des Summenstromwandlers und fast beliebige Auslösekennlinien des Schutzschalters. Um auch den Speicherkondensator klein zu halten, werden als Auslöser vorteilhaft polarisierte Permanentmagnetauslöser eingesetzt, die man weniger kritisch einstellen und mit größeren Auslösekräften arbeiten lassen kann als bei den netzspannungsunabhängigen Schaltungen ohne elektrische Energiespeicherung. Ein modernes Konzept eines Fehlerstromschutzschalters muß aber auch die Auslösung bei Fehlerströmen beherrschen, die in Form von pulsierenden oder geglätteten Gleichströmen auftreten können. Es war ja immer bekannt, daß FI-Schutzschalter nur bei Fehlerwechselströmen wirksam sein können. Hat der Fehlerstrom Gleichstromkomponenten, dann werden die Schutzschalter in ihrer Auslöseempfindlichkeit ungünstig beeinflußt. Da immer mehr elektronische Bauelemente in Haushaltsgeräten verwendet werden, muß auch das Gleichstromproblem gelöst werden. Man hat lange Zeit geglaubt, daß bei den in der Praxis bei elektrischen Haushaltsgeräten verwendeten Schaltungen im Falle eines Masseschlusses der fließende Fehlerstrom immer nur in Form eines pulsierenden Gleichstromes auftreten kann. Für derartige Fehlerströme, wie sie z.B. bei der Einweggleichrichtung ohne Glättungskondensator auftreten,, ist es möglich, Fehlerstromschutzschalter netzspannungsunabhängig mit den klassischen Schaltungen, also auch mit der Energiespeicherauslösung zu bauen (GB—PS—2 082 408 B). Es zeigte sich aber, daß es kaum möglich ist, den Herstellern von Elektrogeräten wegen der FI-Schutzschalter Beschränkungen in der Auswahl der für ihre Geräte notwendigen elektronischen Schaltungen aufzuerlegen. Besonders die Einweggleichrichtungen mit Glättungskondensatoren und die Drehstromgleichrichtungen müssen in diesem Zusammenhang genannt werden.

Netzspannungsunabhängige Schaltungen, auch solche mit elektrischer Energiespeicherung, können aber wegen des transformatorischen Auslöseprinzips Fehlerströme in Form von geglätteten Gleichströmen nicht erkennen. In diesem Fall ist die Anwendung von Elektronikschaltungen erforderlich, die naturgemäß von der Netzspannung abhängen und über Summenstromwandler Fehlergleichströme in allen Formen verarbeiten können.

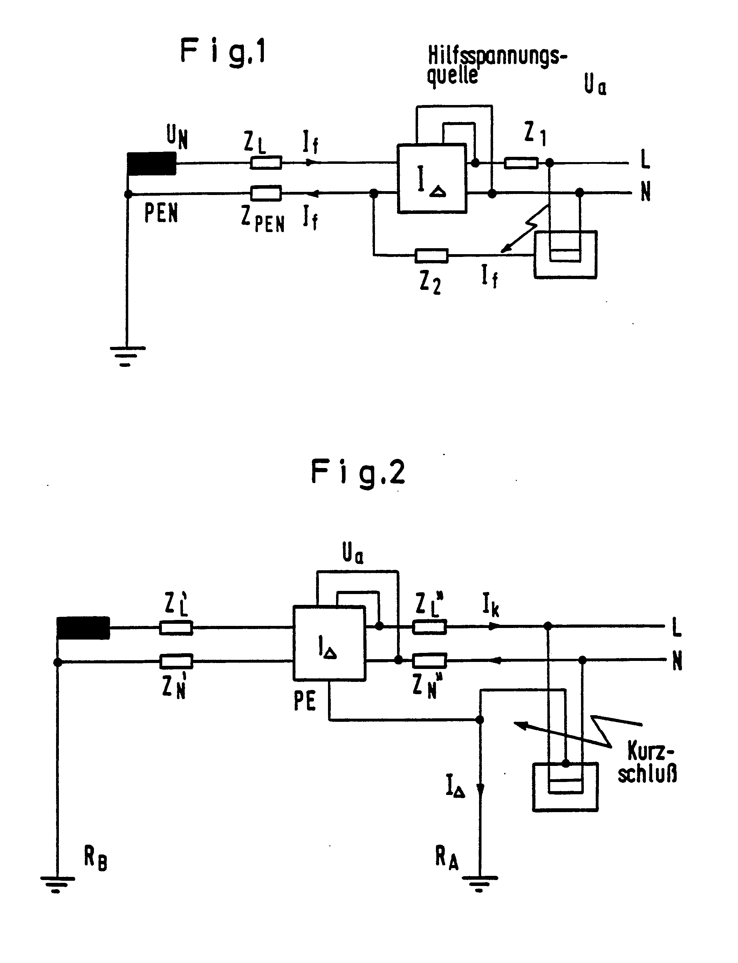

So beschreiben z.B. die US-Patentschrift 3,768,011 und die Offenlegungsschrift DE—OS—27 30 874 derartige Schaltungen. Es tritt also die Frage auf, welche Gefahren durch die Verwendung des Netzes als Hilfsspannungsversorgung für die Auslösung von Fehlerstromschutzschaltern entstehen können. Wird die Hilfsspannung nur von einem Außenleiter und dem Neutralleiter genommen, dann kann der Schalter versagen, wenn der entsprechende Außenleiter oder der Neutralleiter ausfällt (etwa beim Ansprechen einer Sicherung des Außenleiters oder beim Neutralleiterbruch), und Fehlerspannungen, die durch Masseschlüsse der beiden anderen Außenleiter entstehen, können nicht mehr erkannt werden. Aber auch wenn alle drei Außenleiter eines Drehstromnetzes für die Hilfsspannungsversorgung verwendet werden, bleibt immer noch der Neutralleiterbruch. Es wurde deshalb versucht, dadurch Abhilfe zu schaffen, daß der FI-Schalter bei Neutralleiterbruch auslöst (DE—OS—28 25 881). Wenn man dafür einen zusätzlichen Anschluß, z.B. den Schutzleiter verwendet, dann hat dies den Nachteil, daß dadurch die Installation komplizierter und das Erdpotential in den Schalter gebracht wird. Dadurch wird aber die Schaltung empfindlicher gegen Überspannungen, die ja vor allem gegen Erde auftreten. Netzspannungsabhängige Auslösungen haben aber vor allem den Nachteil, daß bei Masseschlüssen in der geschützten Anlage die Höhe der Spannung für die Hilfsspannungsversorgung vom Verhältnis des Netzschleifenwiderstandes zwischen Transformator und den Anschlußpunkten der Hilfsspannungsversorgung zum Gesamtwiderstand der Fehlerschleife abhängt. Dies ist in Figur 1 für den Fall des Masseschlusses in einer genullten Anlage dargestellt.

Bezeichnet man mit

$Z_L$ die Leitungsimpedanz des Außenleiters vom Transformator bis zum Fehlerstromschutzschalter,

$Z_{PEN}$ die Leitungsimpedanz des PEN-Leiters vom Transformator bis zum Fehlerstromschutzschalter

$Z_1$ Leitungsimpedanz des Außenleiters nach dem Fehlerstromschutzschalter bis zur Fehlerstelle

$Z_2$ Leitungsimpedanz des Schutzleiters von der Fehlerstelle bis zum PEN-Leiter

$U_N$ Netzspannung—Außenleiter-PEN-Leiter
$U_a$ Versorgungsspannung der netzspannungs-abhängigen Elektronikschaltung dann gilt für die Höhe der Versorgungsspannung

$$U_a = U_N \times \frac{Z_1 + Z_2}{Z_L + Z_{PEN} + Z_1 + Z_2}$$

Erfolgt also der Masseschluß in der Nähe der Einbaustelle des FI-Schalters, dann kann die Hilfsspannung zu Null werden, womit eine Auslösung unmöglich wird. In diesen Fällen müssen dann die Überstromschutzorgane den Masseschluß wegschalten, der FI-Schalter ist funktionslos geworden. Aus diesem Grund wird in Ländern, die Schalter mit netzspannungsabhängigen Auslösesystemen verwenden, durch den FI-Schutz nur der sogenannte Zusatzschutz erreicht und entsprechende Einschränkungen sind im internationalen Vorschriftenwesen geplant (2, 3).

Es nützt auch nichts, wenn, wie in der DE—OS—28 25 881 angegeben, die Spannung des Neutralleiters gegen den Schutzleiter überwacht wird. Die Schaltung versagt nämlich, wenn zugleich mit dem Masseschluß ein Kurzschluß auftritt. Wie aus Figur 2 ersichtlich sind in diesem Fall die Ausgangsklemmen des FI-Schalters mit dem Schutzleiter zusammen kurzgeschlossen, der Schalter kann nicht auslösen und trotzdem nehmen die geschützten Anlagenteile eine Fehlerspannung von z.B. 110 Van.

Man erkennt dies auf Figur 2 mit den Bezeichnungen

$Z_L'$ Leitungsimpedanz des Außenleiters vom Transformator bis zum Fehlerstromschutzschalter

$Z_N'$ Leitungsimpedanz des Neutralleiters vom Transformator bis zum Fehlerstromschutzschalter

$Z_L''$ Leitungsimpedanz des Außenleiters vom Fehlerstromschutzschalter bis zur Kurzschlußstelle

$Z_N''$ Leitungsimpedanz des Neutralleiters vom Fehlerstromschutzschalter bis zur Kurzschlußstelle

$U_N$ Netzspannung Außenleiter- Neutralleiter
$U_a$ Versorgungsspannung der netzspannungsabhängigen Elektronikschaltung
PE Anschlußklemme für den Schutzleiter im Fehlerstromschutzschalter
$I_k$ Kurzschlußstrom
$I_\Delta$ Fehlerstrom
$R_A$ Erdungswiderstand der geschützten Anlage
$R_B$ Erdungswiderstand des Neutralleiters in der Transformatorenstation (Betriebserde)

$$U_a = U_N \times \frac{Z_L'' + Z_N''}{Z_L' + Z_L'' + Z_N' + Z_N''}$$

Erfolgt also der Kurzschluß nahe beim Fehlerstromschutzschalter, dann bricht die Versorgungsspannung zusammen und die PE-Klemme nimmt ebenfalls das Potential der Kurzschlußstelle an. Der Schalter kann also in keinem Fall auslösen. Der Kurzschlußstrom $I_k$ durchfließt

Außenleiter und Neutralleiter und der durch ihn verursachte Spannungsabfall im Neutralleiter wird im Verhältnis des Anlagenerders $R_A$ zum Betriebserder $R_B$ als Fehlerspannung wirksam. Der infolge der Fehlerspannung fließende Fehlerstrom $I_\Delta$ kann aber den Schalter wegen des Fehlers der Hilfsspannung $U_A$ nicht auslösen. Um also einen Fehlerstromschutzschalter für den Schutz bei indirektem Berühren (Fehlerschutz) einsetzen zu können, müssen folgende Bedingungen erfüllt werden:

1) Der Schalter muß bei normaler Netzspannungsversorgung bei Auftreten von Fehlerwechsel- und/oder Fehlergleichströmen auslösen. Löst er bei Fehlerwechselströmen beim Nennwert des Auslösefehlerstromes $I_{\Delta n}$ aus, dann genügt es aus physiologischen Gründen (4), wenn die Auslösung bei pulsierenden Fehlergleichströmen bei Einweggleichrichtung bei $\sqrt{2} \times I_{\Delta n}$, bei Vollweggleichrichtung bei $2 \times I_{\Delta n}$ und bei geglättetem Fehlergleichstrom bei $2{,}8 \times I_{\Delta n}$ erfolgt. Um dies zu erreichen sind netzspannungsabhängige Elektronikschaltungen erforderlich. Andere Hilfsspannungsquellen, z.B. Batterien, scheiden für diesen Verwendungszweck aus praktischen Gründen aus.

2) Der Schalter muß auch bei Ausfall der Außenleiter und/oder des Neutralleiters sowie bei gleichzeitigen Kurz- und Masseschlüssen bei Fehlerwechselströmen auslösen. Er braucht in diesen Fällen bei Fehlergleichströmen nicht funktionsfähig zu bleiben, weil erstens das gleichzeitige Auftreten einer Netzstörung und eines Fehlergleichstromes ein vernachlässigbares Sicherheitsrisiko darstellt und zweitens bei Kurzschlüssen die Fehlerspannung infolge der Spannungsteilung Außenleiter-Neutralleiter in Netzen bis 240 V gegen Erde unter 120 V bleibt und damit die konventionelle Berührungsspannungsgrenze, die bei Gleichstrom 120 V beträgt, nicht überschritten wird.

Netzspannungsunabhängige Schaltungen können, wie erläutert, geglättete Gleichströme nicht erkennen, netzspannungsabhängige Konstruktionen versagen wieder bei Ausfall der Außenleiter und/oder des Neutralleiters und bei mit Masseschlüssen gleichzeitig auftretenden Kurzschlüssen. Die technischen Forderungen hinsichtlich des Schutzes bei indirektem Berühren schließen sowohl netzspannungs unabhängige Schaltungen als auch netzspannungsabhängige Schaltungen aus. Diese scheinbar widersprüchlichen Forderungen an einen Fehlerstromschutzschalter für den Schutz bei indirektem Berühren (Fehlerschutz) löst mit günstigen wirtschaftlichem Aufwand die im folgenden beschriebene Erfindung.

Es wäre natürlich möglich, zwei FI-Schalter in Serie zu verwenden, einen mit netzspannungsunabhängiger Schaltung zur Erfüllung der unter 2) genannten Schutzbedingung und eine netzspannungsabhängige Konstruktion für die Schutzbedingungen, die in 1) angeführt wurden. Dieser Aufwand ist wirtschaftlich nicht zu vertreten. Auch der Einbau der beiden Systeme in einen Schalter mit zwei Summenstromwandlern und/ oder zwei Fehlerstromauslösern ist aus wirtschaftlichen Gründen und wegen des Platzbedarfes nicht möglich. Dies ist der Grund weshalb das Patent DE—PS—23 48 881 nie in der Praxis angewendet wurde. Es beschreibt einen Fehlerstromschutzschalter mit einer Summenstromwandleranordnung mit einer Sekundärwicklung, die mit der Erregerwicklung des Fehlerstromauslösers verbunden ist, wobei in der Sekundärwicklung von einer äußeren Wechselstromquelle ein Ruhestrom zum Vormagnetisieren des Wanderkerns eingespeist wird, wobei als kennzeichnend beschrieben wird, daß zusätzlich eine weitere, gesonderte Summenstromwandleranordnung mit einer der ersten Summenstromwandleranordnung entsprechenden Anzahl von Primärwicklungen und mit einer auf das der ersten Summenstromwandleranordnung zugeordnete Schaltschloß einwirkenden Sekundärwicklung angeordnet ist. Kennzeichnend für dieses Patent ist also die Verwendung von zwei Summenstromwandlern, und dies war eben der Grund, warum dieses Patent keine praktische Bedeutung erlangt hat.

Aus der EP—OS—0 113 026 ist ein Fehlerstromschutzschalter bekannt geworden, bei dem ein Relais lediglich über eine Gleichrichterschaltung mit der Sekundärwicklung des Summenstromwandlers verbunden ist. Zur Erhöhung der Empfindlichkeit der Auslöseschaltung kann ein Kondensator verwendet werden, der mit der in der Auslöseschaltung befindlichen Induktivität (Relais bzw. Sekundärwicklung) einen auf die sekundärseitige Frequenz abgestimmten LC-Kreis bildet. Eine Energiespeicherschaltung ist diese bekannte Schaltung nicht.

Auch aus der US—PS—4 320 433 ist eine Energiespeicherschaltung nicht bekanntgeworden.

Aus der FR—A—24 16 580 ist ein Fehlerstromschutzschalter bekanntgeworden, der einen Fehlerauslöser, einen Summenstromwandler, eine netzspannungsunabhängige und eine netzspannungsabhängige Elektronikschaltung aufweist, wobei letztere einen Oszillator enthält, der eine Spannung in einer Wicklung des Summenstromwandlers erzeugt, und einen Gleichfehlerstromdetektor. Die spannungsunabhängige Elektronikschaltung ist mit einem Wechselfehlerstromdetektor versehen, der beim Auftreten von Fehlerwechselströmen anspricht und den Fehlerauslöser ansteuert. Treten Gleichfehlerströme auf, so simuliert der Gleichfehlerstromdetektor einen Kurzschluß zwischen Phase und Mp, woraufhin der Wechselfehlerstromdetektor anspricht und den Fehlerauslöser betätigt. Dabei werden für beide Fehlerstromarten nur ein Summenstromwandler und ein Fehlerauslöser eingesetzt.

Aufgabe der Erfindung ist es daher, einen Fehlerstromschutzschalter der in der DE—A—2825881 genannten Art zu schaffen, der sowohl für Wechselfehler- als auch für Gleichfehlerströme sowie für Wechselfehlerströme mit Gleichstromkomponente gleichgut geeignet und dabei einfach in seinem Aufbau ist.

Diese Aufgabe wird erfindungsgemäß durch die Merkmale des Anspruches 1 gelöst.

Die Sekundärwicklung des Summenstromwandlers dient sowohl für die Aufladung des Speicherkondensators bei netzspannungsunabhängiger Auslösung beim Auftreten von Fehlerwechselströmen bzw. pulsierenden Fehlergleichströmen, als auch zur Steuerung der Elektronikschaltung, mit der glatte Fehlergleichströme oder aber auch pulsierende Fehlergleichströme erfaßt werden, falls die Energiespeicherschaltung nur für Fehlerwechselströme ausgelegt ist. Versieht man den Summenstromwandler mit einer Sekundärwicklung und einer Tertiärwicklung, dann kann die Sekundärwicklung für die Energiespeicherschaltung und die Tertiärwicklung für die Steuerung der Elektronikschaltung verwendet werden. Durch diese Lösung kann man die Energiespeicherschaltung galvanisch von der Elektronikschaltung trennen, wenn man den Fehlerstromauslöser mit zwei Auslösespulen versieht.

Eine weitere Beeinflussung der Auslösekennlinie des FI-Schutzschalters ist auf einfache und bekannte Weise (AT—PS—205 574) dadurch möglich, daß über die Elektronikschaltung in der Sekundär- oder Tertiärwicklung des Summenstromwandlers dauernd ein künstlicher Fehlerstrom erzeugt wird, der unter der Ansprechgrenze des Schutzschalters liegt. Der Summenstromwandler wird dann auch durch diesen Fehlerstrom vorerregt und der Speicherkondensator dadurch teilweise aufgeladen. Entsteht nun in der Anlage ein echter Fehlerstrom, der den Auslösestrom des Schalters überschreitet, so bewirkt dieser die restliche Aufladung des Speicherkondensators bis zum Ansprechen der Energiespeicherschaltung.

Dies kann dadurch erreicht werden, daß der durch die netzspannungsabhängige Elektronikschaltung erzeugte Signalstrom mit geeigneter Frequenz, der ja über die Sekundär- oder Tertiärwicklung des Summenstromwandlers fließt, diese induziert und damit über die Gleichrichterschaltung die Energievorspeicherung des Speicherkondensators bewirkt.

Anhand der Zeichnung, in der dem Stand der Technik zugehörige Schaltungen un Ausführungsbeispiele der Erfindung dargestellung sind, soll die Erfindung näher erläutert und beschrieben werden.

Es zeigt:
Fig. 1 und 2 zwei bekannte Schaltungen, die schon oben beschrieben sind,
Fig. 3, 4 und 5 je ein Ausführungsbeispiel eines erfindungsgemäßen Fehlerstromschutzschalters.
Die Phasenleiter $L_1$, $L_2$, $L_3$ und der Neutralleiter N eines Netzes sind als Primärwicklungen durch einen Summenstromwandler 10 hindurchgeführt. Der Summenstromwandler 10 trägt eine Sekundärwicklung 11, an der eine Gleichrichterschaltung 12 angeschlossen ist, der ein als Kondensator 13 ausgebildeter Energiespeicher parallel geschaltet ist, welcher Kondensator 13 nach Erreichen einer bestimmten Ladespannung einen Schwellwertschalter 14 durchschaltet. Parallel zu dem Energiespeicher 13 ist ein Permanentmagnetauslöser 15 geschaltet, der ein Schaltschloß 16 auslöst, das Kontaktstücke 17 in den Leitern $L_1$ bis $L_3$ und N öffnet. Über Versorgungsleitungen 18, die mit dem Phasenleiter $L_1$ und dem Neutralleiter N verbunden sind, wird eine elektronische Erfassungseinrichtung 19 mit Spannung versorgt, die Gleichfehlerströme an der Sekundärwicklung erfaßt und über Verbindungsleitungen 20 und 21 mit dem Energiespeicher verbunden ist.

Die Sekundärwicklung 11 dient damit sowohl für die Aufladung des Kondensators 13 beim Fließen von Fehlerwechselströmen und ggf. auch bei pulsierenden Fehlergleichströmen, als auch zur Steuerung der netzspannungsabhängigen Elektronikschaltung 19, die beispielhaft so gestaltet ist, daß sie parallel zum Kondensator 13 liegt, also auch beim Ansprechen mit Auslöseimpulsen über das spannungsabhängige Halbleiterelement 14 und die Auslösespule des Fehlerstromauslösers 15 arbeitet.

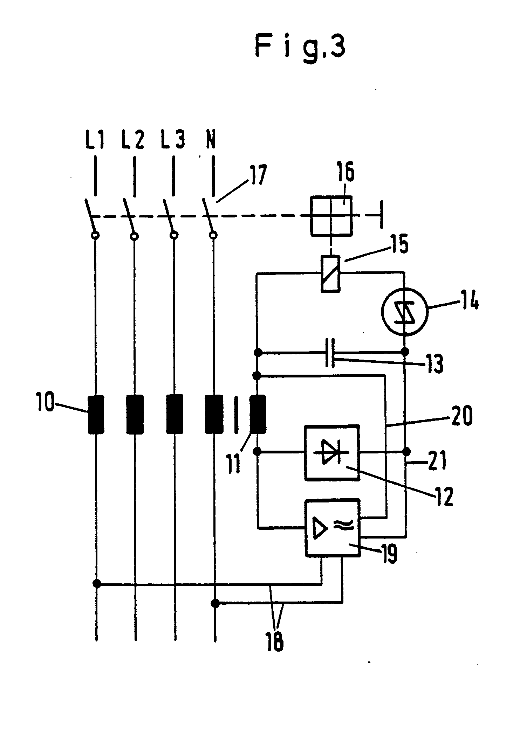

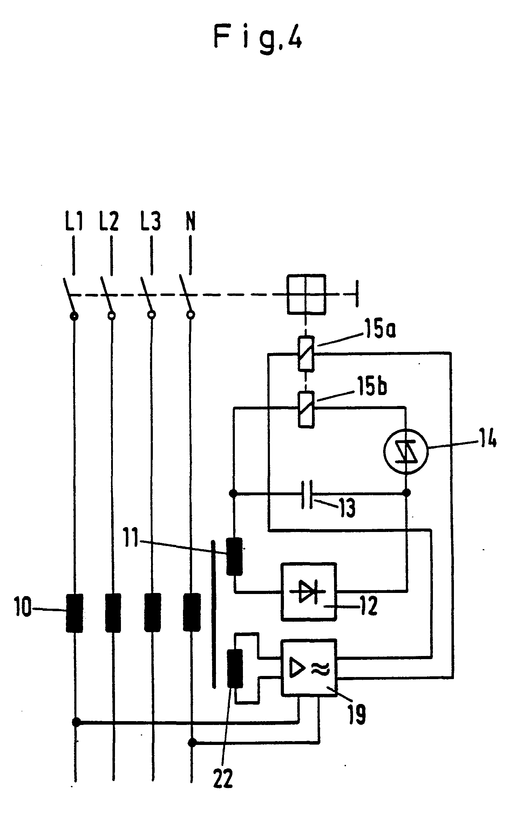

Die Schalteranordnung nach Figur 4 unterscheidet sich von der nach Figur 3 nur dadurch, daß der Summenstromwandler 10 eine Sekundärwicklung 11 und eine Tertiärwicklung 22 besitzt, wobei die Sekundärwicklung für die Energiespeicherschaltung und die Tertiärwicklung 22 für die Steuerung der Elektronikschaltung verwendet wird. Der Fehlerstromauslöser 15 besitzt beispielsweise zwei Auslösespulen 15a und 15b. Dadurch ist der Auslösekreis der Energiespeicherschaltung galvanisch vom Auslösekreis der Elektronisschaltung und damit auch vom Netz getrennt.

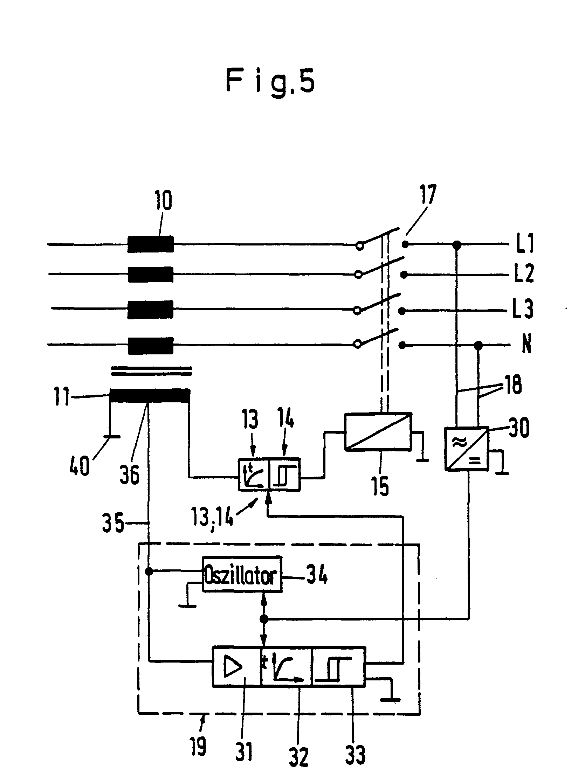

Eine detaillierterer Ausgestaltung der Erfindung ist in Figur 5 zu entnehmen. Man erkennt wieder die Phasenleiter $L_1$, $L_2$, $L_3$ sowie den Neutralleiter N, die als Primärwicklungen durch den Summenstromwandler 10 hindurchgeführt sind. An der Sekundärwicklung 11 schließt die Energiespeicherstellung an, die durch ein Zeitglied 13 und einen Schwellwertschalter oder eine Triggerschaltung 14 angedeutet ist. Der Ausgang der Schaltung 13/14 ist auf das Relais 15 aufgeschaltet und dann, wenn Wechselfehlerströme auftreten, wird der Kondensator 13 aufgeladen und bei einem bestimmten Ladezustand über den Schwellwertschalter 14 auf das Relais 15 entladen, wodurch die Kontaktstücke 17 öffnen. Über die Leitungen 18 ist ein Gleichrichter 30 mit dem Phasenleiter $L_1$ und N verbunden, welcher Gleichrichter 30 zur Versorgung der strichliert eingerahmten Elektronikschaltung 19 dient. Diese Elektronikschaltung besitzt im wesentlichen ein Verstärkerteil 31, ein Zeitglied oder einen Integrator 32 und einen Schwellwertschalter 33 sowie einen Oszillator 34. Mittels des Oszillators wird über eine Leitung 35 an einer Anzapfstelle 36 der Sekundärwicklung 11 der Summenstromwandler 10 mit einer Frequenz von vorzugsweise 500 Hz auf- bzw. abmagnetisiert, entsprechend der Hystereseschleife des Materials des Summenstromwandlers. Bei Auftreten eines Gleichfehlerstromes bzw. eines Wechselfehlerstromes mit Gleichstromkomponenten fährt der Summenstromwandler in Richtung Sättigung, d.h. also in die Unsymmetrie und der dabei auftretende Spannungsabfall wird über die Schaltungsanordnung 31/32/33 erfaßt und verarbeitet und der Energiespeicherschaltung 13/14 zugeführt, wodurch eine Auslösung des Relais 15 und damit eine Öffnung der Kontaktstellen 17 bewirkt wird.

Bei den bekannten elektronischen Schaltungsanordnungen zur Erfassung von Gleichfehlerströmen wird im wesentlichen eine Frequenz von 1000 bis 5000 Hz benutzt, um den Kern vorzumagnetisieren. Damit ein derartiger Fehlerstromschutzschalter auch Wechselfehlerströme detektieren kann, ist meist ein zweiter Summenstromwandler vorzusehen, siehe z.B. die DE—PS—23 48 881. Dadurch, daß die Frequenz des Oszillators auf ca. 500 Hz heruntergesetzt wird, kann der für Wechselfehlerströme geeignete Summenstromwandler mitbenutzt werden; wenn dabei der Wandler aus F80-Material hergestellt wird, benötigt man 700 Windungen an der Sekundärseite und die Anzapfung erfolgt etwa bei einer Windungszahl von 100, so daß zwischen dem Anschluß 40 und der Anzapfleitung 35 100 Windungen der Sekundärwicklung liegen.

Literatur:
(1) Biegelmeier, G.: Moderner Fehlerstromschutz. E.u.M., 75. Jg. (1958), H.8, S. 157...164
(2) Biegelmeier, G.: Gedanken über die Nullung (TN-System) als optimalen Fehlerschutz (Schutzmaßnahme bei indirektem Berühren) in elektrischen Anlagen. ÖZE 37. Jg. (1984), H.12, S.483
(3) IEC 64 (Central Office) 151, January 1985, IEC Publ. 364 Part 5, Chapter 53 switchgear and controlgear
(4) IEC-Report 479, second Edition: Effects of electric shock on the human body, Part 2, Chapter 5

**Patentansprüche**

1. Fehlerstromschutzschalter bestehend aus einem in einem geeigneten Gehäuse mit Anschlußklemmen für die Installationsleitungen angeordneten Kontaktapparat mit zugehörigem Schaltschloß, Prüfeinrichtung und Betätigungsorgan mit einem Fehlerstromauslöser (15) mit einer oder zwei Auslösespulen (15a, 15b), einem Summenstromwandler (10), einer netzspannungsunabhängigen, elektronischen Energiespeicherschaltung (13) und einer netzspannungsabhängigen Elektronikschaltung (19), wobei einerseits die netzspannungsunabhängige Energiespeicherschaltung (12) einen Kondensator (13) enthält, der bei Auftreten von Fehlerwechselströmen und ggf. auch bei pulsierenden Fehlergleichströmen sowie bei Fließen von Fehlergleichströmen und ggf. auch bei Fehlerwechselströmen mit Gleichstromkomponenten über eine Gleichrichterschaltung (12) und über den Summenstromwandler (10) fehlerstromabhängig aus dem Netz aufgeladen wird und sich über ein spannungsabhängiges Halbleiterbauelement (14) bei Erreichen einer bestimmten Ladespannung impulsartig über eine Auslösepule (15a, 15b) des Fehlerstromauslösers (15) entlädt und dadurch den Fehlerstromschutzschalter auslöst, andererseits diese Auslösung auch durch die netzspannungsabhängige Elektronikschaltung (19) bei Auftreten von Fehlergleichströmen und ggf. auch bei Fehlerwechselströmen mit Gleichstromkomponenten dadurch bewirkt wird, daß der Gleichstrom oder die Gleichstromkomponente in dem Summenstromwandler (10) die durch einen Oszillator der Elektronikschaltung in einer Wicklung (11) des Wandlers erzeugte Spannung durch Asymmetrie oder durch Verschiebung des Arbeitspunktes so verändert, daß über die Elektronikschaltung (19) ein Schaltvorgang bewirkt wird, durch den mit Hilfe der Netzenergie ein Fehlerstromauslöser betätigt wird, wobei nur ein Summenstromwandler (10) und nur ein Fehlerstromauslöser (15) vorzugsweise in Form eines Permanentmagnetauslösers sowohl für die netzspannungsunabhängige Auslösung durch die Energiespeicherschaltung (12) mit den Bauelementen elektronisches Schaltelement (14), Speicherkondensator (13) und Gleichrichterschaltung (12), als auch für die netzspannungsabhängige Auslösung mit der Elektronikschaltung (19) verwendet werden, wobei die Elektronikschaltung (19) so aufgebaut ist, daß durch sie die Auslösung des Fehlerstromschutzschalters mit der gleichen Auslösekennlinie erfolgt wie bei der Auslösung durch die netzspannungsunabhängige Energiespeicherschaltung (13).

2. Fehlerstromschutzschalter nach Anspruch 1, dadurch gekennzeichnet, daß der Summenstromwandler (10) außer der Sekundärwicklung (11) noch eine Tertiärwicklung (22) besitzt, wobei die Sekundärwicklung (11) für die netzspannungsabhängige Auslösung durch die Energiespeicherschaltung (13) vorgesehen ist und die Tertiärwicklung (22) für die netzspannungsabhängige Auslösung über die Elektronikschaltung (19) verwendet wird.

3. Fehlerstromschutzschalter nach Anspruch 1 oder 2, dadurch gekennzeichnet, daß der Fehlerstromauslöser zwei Auslösespulen (15a, 15b) besitzt, von denen eine (15b) durch die netzspannungsabhängige Energiespeicherschaltung (13) und die zweite (15a) über die Elektronikschaltung (19) vom Netz erregt wird (Figur 4).

4. Fehlerstromschutzschalter nach einem der Ansprüche 1, 2 oder 3, dadurch gekennzeichnet, daß über die Elektronikschaltung (19) in der Sekundär- oder Tertiärwicklung (11, 22) des Summenstromwandlers (10) ein Erregerstrom geeigneter Frequenz dauernd zum Fließen gebracht wird, dessen Induktionsspannung über die Gleichrichterschaltung (12) der netzspannungsunabhängigen Energiespeicherschaltung (13) eine Vorspeicherung des Speicherkondensators (13) bewirkt.

**Revendications**

1. Disjoncteur de protection contre les courants de défaut, constitué par un appareil de contact agencé dans un boîtier approprié avec des bornes de raccordement pour les lignes d'installation, ledit appareil ayant un verrou de maintien qui lui est conjugué, un dispositif de contrôle et un organe d'actionnement avec un déclencheur à courant de défaut (15) avec une ou deux bobines de déclenchement (15a, 15b), un transformateur de courant total (10), un circuit électronique accumulateur d'énergie (13), indépendant de la tension du réseau, et un circuit électronique (19) dépendant de la tension du réseau, le circuit accumulateur d'énergie indépendant de la tension du réseau (12) contenant un condensateur (13) qui, lors de l'occurrence de courants alternatifs de défaut et éventuellement aussi en présence de courants continus de défaut pulsatoires ainsi que lors de l'écoulement de courants continus de défaut et éventuellement aussi dans le cas de courants alternatifs de défaut comportant des composantes de courant continu, est chargé à partir du réseau, en fonction du courant de défaut, par un circuit redresseur (12) et par le transformateur de courant total (10), et, lorsqu'une tension de charge déterminée est atteinte, se décharge en mode impulsionnel par un composant semiconducteur dépendant de la tension (14), dans une bobine de déclenchement (15a, 15b) du déclencheur à courant de défaut (15) et déclenche de ce fait le disjoncteur de protection contre les courants de défaut, ce déclenchement étant par ailleurs également provoqué par le circuit électronique dépendant de la tension (19) lors de l'occurrence de courants continus de défaut et éventuellement aussi dans le cas de courants alternatifs de défaut ayant des composantes de courant continu, ce déclenchement étant provoqué par le fait que le courant continu ou les composantes de courant continu modifie(nt) dans le transformateur de courant total (10) par asymétrie ou par déplacement du point de travail la tension produite par un oscillateur du circuit électronique dans un enroulement (11) du transformateur, de manière à provoquer, par l'intermédiaire du circuit électronique (19), un processus de commutation par lequel un déclencheur à courant de défaut est actionné à l'aide de l'énergie du réseau, un seul transformateur de courant total (10) et un seul déclencheur à courant de défaut (15), de préférence sous la forme d'un déclencheur à aimant permanent, étant utilisés aussi bien pour le déclenchement indépendant de la tension du réseau par le circuit accumulateur d'énergie (12), doté des composants comprenant élément de commutation électronique (14), condensateur accumulateur (13) et circuit redresseur (12), que pour le déclenchement dépendant de la tension du réseau par le circuit électronique (19), le circuit électronique (19) étant construit de manière telle qu'il effectue le déclenchement du disjoncteur de protection contre les courants de défaut avec la même courbe caractéristique de déclenchement que dans le cas du déclenchement par le circuit accumulateur d'énergie indépendant de la tension du réseau (13).

2. Disjoncteur de protection contre les courants de défaut selon revendication 1, caractérisé par le fait que le transformateur de courant total (10) possède, en plus de l'enroulement secondaire (11), un enroulement tertiaire (22), l'enroulement secondaire (11) étant prévu pour le déclenchement dépendant de la tension, par le circuit accumulateur d'énergie (13), et l'enroulement tertiaire (22) étant utilisé pour le déclenchement en fonction de la tension du réseau via le circuit électronique (19).

3. Disjoncteur de protection contre les courants de défaut selon revendication 1 ou 2, caractérisé par le fait que le déclencheur à courant de défaut possède deux bobines de déclenchement (15a, 15b), la première (15b) étant excitée par le circuit accumulateur d'énergie dépendant de la tension du réseau (13), et la deuxième (15a) étant excitée par le réseau par l'intermédiaire du circuit électronique (19) (figure 4).

4. Disjoncteur de protection contre les courants de défaut selon l'une des revendications 1, 2 ou 3, caractérisé par le fait qu'un courant excitateur de fréquence appropriée est amené à passer enpermanence, via le circuit électronique (19), dans l'enroulement secondaire ou tertiaire (11, 22) du transformateur de courant total (10), la tension d'induction inhérente à ce courant provoquant, via le circuit redresseur (12) du circuit accumulateur d'énergie indépendant de la tension (13), une précharge du condensateur accumulateur (13).

**Claims**

1. Leakage-current-operated circuit breaker consisting of a contact mechanism arranged in a suitable housing with connecting terminals for the wiring lines, with associated breaker mechanism, safety device and actuating element with a leakage-current trip (15) with one or two trip coils (15a, 15b), a summation current transformer (10), a mains-voltage-independent electronic energy storage circuit (13) and a mains-voltage-dependent electronic circuit (19), in which circuit breaker on the one hand the mains-voltage-independent energy storage circuit (12) (sic) contains a capacitor (13) (sic) which is charged up from the mains in dependence on the leakage current when alternating leakage currents occur and possibly also when pulsating direct leakage currents occur and when direct leakage currents flow and possibly also with alternating leakage currents having direct-current components via a rectifier circuit (12) and via the summation current transformer (10) and discharges pulsatingly via a trip coil (15a, 15b) of the leakage-current trip (15) va a voltage-dependent semiconductor component (14) when a particular charging voltage is reached and, as a result, trips the leakage-current-operated circuit breaker, and on the other hand this tripping is also effected by the mains-voltage-dependent electronic circuit (19) when direct leakage currents occur and possibly also with alternating leakage currents having direct-current components, due to the fact that the direct current or the direct-current component in the summation current transformer (10) changes the voltage generated in a winding (11) of the transformer by an oscillator of the electronic circuit, due to assymmetry or by a shifting of the operating point in such a manner that a switching process is effected via the electronic circuit (19) by means of which a leakage-current trip is operated with the aid of the mains power, only one summation current transformer (10) and only one leakage-current trip (15), preferably in the form of a permanent magnet trip, being used both for the mains-voltage-independent tripping by the energy storage circuit (12) (sic) with the components of electronic switching element (14), storage capacitor (13) (sic) and rectifier circuit (12), and for the mains-voltage-dependent tripping with the electronic circuit (19), the electronic circuit (19) being constructed in such a manner that it effects the tripping of the leakage-current-operated circuit breaker with the same tripping characteristic as with the tripping by the mains-voltage-independent energy storage circuit (13).

2. Leakage-current-operated circuit breaker according to Claim 1, characterized in that the summation current transformer (10) also has a tertiary winding (22) apart from the secondary winding (11), the secondary winding (11) being provided for the mains-voltage-dependent tripping by the energy storage circuit (13) and the tertiary winding (22) being used for the mains-voltage-dependent tripping via the electronic circuit (19).

3. Leakage-current-operated circuit breaker according to Claim 1 or 2, characterized in that the leakage-current trip has two tripping coils (15a, 15b) one of which (15b) is excited by the mains-voltage-dependent energy storage circuit (13) and the second one of which (15a) is excited from the mains via the electronic circuit (19) (Figure 4).

4. Leakage-current-operated circuit breaker according to one of Claims 1, 2 or 3, characterized in that an exciter current of suitable frequency, the induced voltage of which effects a prestorage of the storage capacitor (13) (sic) via the rectifier circuit (12) of the mains-voltage-independent energy storage circuit (13), is made to flow continuously in the secondary or tertiary winding (11, 22) of the summation current transformer (10) via the electronic circuit (19).

# F i g.1

# F i g.2

# F i g.3

# Fig.4

# Fig.5